# EUROPEAN PATENT SPECIFICATION

(11) **EP 1 707 957 B1**
(45) Date of publication and mention of the grant of the patent: **26.02.2014**
(21) Application number: 06251734.7
(22) Date of filing: 29.03.2006
(51) Int. Cl.: G01N 30/20, G01N 30/10, G01N 30/34, G01N 30/38

(54) **Device and system for liquid chromatography**
Vorrichtung und System für die Flüssigkeitschromatographie
Dispositif et système de chromatographie liquide

(30) Priority: 29.03.2005 US 93605
(43) Date of publication of application: 04.10.2006
(73) Proprietor: Agilent Technologies, Inc., Santa Clara CA 95051 (US)
(72) Inventor: Killeen, Kevin P., Loveland CO 80537-0599 (US); Yin, Hongfeng, Loveland CO 80537-0599 (US); Kraiczek, Karsten G., Loveland CO 80537-0599 (US)
(74) Representative: Grünecker, Kinkeldey, Stockmair & Schwanhäusser

(56) References cited:
- EP-A- 1 338 894
- EP-A- 1 394 539
- EP-A- 1 447 136
- US-A- 5 431 712
- US-A1- 2002 146 349
- US-A1- 2002 187 557
- US-A1- 2004 119 070

## Description

Chromatography is a method for separating a sample into individual components or analytes. In High Pressure Liquid Chromatography (HPLC), a liquid sample comprising analytes is introduced into a column under pressure. The column comprises a stationary phase with which may be provided in a variety of forms, e.g., such as an insoluble resin, gel or a monolithic material. When a protein is applied to an HPLC column in a mobile phase, it equilibrates between the stationary phase and the mobile phase as it passes through the column. The speed with which a sample analyte in a mobile phase travels through the column depends on the non-covalent interactions of the analyte with the stationary phase. For example, those sample analytes that have stronger interactions with the stationary phase than with the mobile phase will elute less quickly than those analytes that have less strong interactions. Thus, in reverse phase liquid chromatography, where the stationary phase comprises a hydrophobic surface and the mobile phase is typically a mixture of water and an organic solvent, the least hydrophobic component moves through the chromatography bed first, followed by components with increasing hydrophobicity.

In isocratic liquid chromatography (LC), the content of the mobile phase is constant during elution. In contrast, in gradient chromatography, the content of the mobile phase changes during the elution process. Gradient LC not only offers high resolution and high-speed separation of wide ranges of compounds, it also permits the injection of large sample volumes without compromising separation efficiency, because during the initial time when sample is introduced, the mobile phase strength is often kept low (i.e., the water content is high), so that sample is trapped at the head of the LC column bed and interferences such as salts are washed away. Mobile phase strength is gradually increased (i.e., decreasing water content) in order to enhance elution of more strongly-retained analytes.

A gradient HPLC system generally incorporates some mechanism for changing the composition of a mobile phase during a separation procedure. HPLC mobile phase gradients are often generated using two or more independent high-pressure pumps. The relative flow from each pump is determined by a system controller, and pump outputs are mixed prior to sample introduction into the HPLC column. Conventional HPLC pumps perform well at certain flow-rate ranges, generally between 10 µl per minute to 1 ml per minute. When a gradient is required, two pump heads are typically used to pump two mobile phases independently and the ratio of the mobile phases to each other is changed over the course of the elution period. Generally, at the onset, one mobile phase contributes to a small proportion of the combined flow and therefore the pump head providing that mobile phase pumps at a much lower flow rate than the combined flow rate. This flow rate may lie outside of the optimum flow rate-range of the pump. This limitation is particularly pronounced when microbore liquid chromatography columns are employed, because the required mobile-phase flow rate through the columns is extremely low. For example, when a pump is pumping at a flow rate of 1 µl per minute and the gradient starts at 5% of a given mobile phase, the pump may be required to pump 50 nanoliters per minute, which could be outside of its working range.

In order to obtain smooth gradients, conventional LC pumps include a built-in pressure damper and mixer. The combined volume of the mixer and damper which is the volume of liquid in the system between the point where the gradient is formed (e.g., at a mixing chamber inlet) and the point where it enters the column or the "delay volume" is generally between 0.3 ml and 0.5 ml. The delay volume divided by the flow rate determines the delay time or the time it takes after the mobile phase gradient is formed to reach the column. Delay time can limit the lowest gradient flow a pump system can deliver. For example, at a flow rate of 1ml per minute, the delay time is 0.3 minutes. However, when the flow rate drops to 10 µl per minute, the delay time is about 30 minutes, which makes gradient chromatography at such a flow rate impractical.

Certain commercial low flow-rate pumps employ a split flow design. The flow rate is uniformly high (about 200 µl/min - 800 µl/min), but only a small fraction of the pumped mobile phase is loaded onto a capillary HPLC column; the majority of the flow is diverted to a waste bottle. Flow delivered to the column is delivered at a low flow rate (e.g., about 100 µl/minute or less). Because viscosity of the mobile phase changes during the course of a run, pressure typically drops during the run, when the gradient is from low to high of organic solvent.

Systems comprising an electronic flow control unit provide active splitting, providing feedback control through the combination of a flow meter and a variable flow resistor. With an active split design the delay time may still be significant (e.g., approximately 5 minutes) for nanoliter/minute flow rates. The delay volume between the active splitter and the head of the column contributes to this effect. Dispersion caused by fluidic connections in this region generates long recovery times from the end of the gradient to the beginning of the gradient. The recovery time can be as long as 20 minutes when the pump is running at 200 nl/min.

Microfluidic devices may be used for chromatographic separations. Microfluidic devices that incorporate a liquid chromatographic functionality have been described in U.S. patent publication 2003 017609. These microfluidic devices may employ integrated mechanical valve technologies, such as those described in U.S. patent publication 2003 015682, for sample introduction and to reduce the volume of "dead space" in the microfluidic devices. The present invention relates to a microfluidic device according to claim 1 and a system comprising such device as well as a detector for monitoring separation of sample components of claim 12. Preferred embodiments of the device and the system are defined in the dependent claims.

In aspect, the application relates to a microfluidic device comprising a fluid-transporting conduit comprising a stationary phase ("LC conduit"), which is in communication with at least one mobile phase-transporting conduit. The device comprises a splitting region upstream of an inlet of the LC conduit, for diverting a portion of a mobile phase to a waste reservoir prior to introduction of the mobile phase into the introduction portion of the LC conduit. The device further comprises a mechanism for selectively controlling splitting. In one aspect, an LC gradient is run without splitting. After sample components are eluted from the LC conduit into a receiving conduit downstream of the LC conduit, flow rate through the mobile phase transporting conduit is increased and the a portion of the fluid flowing through the mobile phase transporting conduit is split at the splitting region, diverting a portion of the mobile phase to the waste reservoir, while permitting the remaining portion of the mobile phase to proceed to the inlet of the LC conduit.

In one embodiment, selective on-chip splitting is implemented in combination with sample injection. On-chip splitting may also be implemented independently from sample injection. For example, the device may be activated to split the mobile phase at any time before, during and/or after formation of an LC gradient.

The mechanism for selectively diverting the mobile phase comprises a switching structure which selectively connects the mobile phase-transporting conduit to a splitting region of the device comprising two fluid transporting features, wherein one fluid-transporting feature is, or is connected, to the conduit comprising the stationary phase and the other fluid transporting feature is, or is connected to, a waste reservoir.

The device comprises a substrate comprising a cover and the switching structure is rotatable about an axis perpendicular to the substrate. In another aspect, the switching structure is movable from a first position in which the mobile phase-transporting conduit is connected to the conduit comprising the stationary phase, without diverting a portion of its flow, to a second position in which a portion of its flow is diverted to a fluid transporting feature that is, or is connected to, a waste reservoir.

In one aspect, the mechanism for selectively controlling splitting comprises a switching structure comprising a plate, which at least partially overlies the device and which can be moved from a first position to at least a second position. The switching structure comprises at least one fluid-transporting feature (e.g., a conduit, port, reservoir, etc) for connecting (either directly or indirectly) a mobile phase introducing channel to the LC conduit (without splitting) or to a splitting region, where the mobile phase is split prior to introduction to the LC conduit. In one aspect, fluid-transporting features used to split fluid flow are formed in the switching plate.

Devices according to the invention can comprise additional separation conduits upstream or downstream of the LC conduit comprising the stationary phase. These additional separation conduits can comprise a stationary phase or other separation medium, e.g., such as an immunoaffinity matrix.

In certain aspects of the invention, the mobile phase-transporting conduit is in communication with a mobile phase source. In one aspect, the mobile phase source comprises or forms a gradient of a mobile phase component. In another aspect, the mobile phase-transporting conduit is in fluid communication with an inlet for delivering different concentrations of the mobile phase component. In a further aspect, the mobile phase-transporting conduit is in fluid communication with a plurality of inlets for delivering different concentrations of a mobile phase component.

In one aspect not part of the present invention, the mechanism for selectively diverting the portion of the mobile phase comprises a first and second switching structure. The first switching structure selectively connects a mobile phase-transporting feature to a conduit comprising a stationary phase, while the second transporting feature selectively connects the mobile phase-transporting feature to a diverting conduit and the conduit comprising the stationary phase. Connections can be formed, for example, by moving the first and/or second switching structure relative to the substrate and cover of the device (e.g., by rotating the first and/or second switching structure about an axis perpendicular to the substrate/cover). In one aspect, the first switching structure selectively connects the mobile phase-transporting feature to a sample inlet of the device. In another aspect, the first switching structure connects the mobile phase transporting feature to the conduit comprising the stationary phase without diverting fluid prior to its introduction into the conduit comprising the stationary phase.

In one embodiment, the substrate comprises a channel defining a portion of the mobile-phase transporting conduit.

In another embodiment, the switching structure comprises at least a portion of the mobile-phase transporting conduit.

An other aspect relates to a system comprising a device of the present invention and a detector for monitoring separation of sample components by the conduit comprising the stationary phase. In one aspect, the system further comprises an analysis module, e.g., such as a mass spectrometer, for obtaining and analyzing data relating to separated sample components.
In another aspect, the system further comprises a processor for receiving signals from the detector. In still another aspect, the processor correlates the signals with one or more properties (e.g., such as chemical and/or physical properties of the analytes).

A further aspect not part of the present invention relates to a method comprising, providing a mobile phase to any of the devices disclosed herein and selectively diverting a portion of the mobile phase, while permitting the remainder to flow to the conduit comprising the stationary phase. In one aspect, the method comprises
providing a mobile phase to the conduit comprising the stationary phase at a first flow rate without diverting a portion of the mobile phase; and providing a mobile phase to the conduit comprising the stationary phase, wherein a portion of the mobile phase is diverted from the conduit comprising the stationary phase while the remainder is delivered to the conduit comprising the stationary phase at a second flow rate. In one aspect, a mobile phase is provided to the LC conduit without splitting (i.e., diversion of a portion to a waste conduit) at a first flow rate and then a mobile phase is provided to the LC conduit with splitting. In one aspect, the second flow rate is lower than the first flow rate.

In one aspect the split mobile phase comprises a gradient of a mobile phase component. In one aspect, the mobile phase introduced to the LC conduit without splitting also comprises a gradient of a mobile phase component. In another aspect, a gradient of a mobile phase component is formed in the conduit comprising the stationary phase. In a further aspect, the gradient is formed before, during or after splitting.

In another aspect, the application also provides a method for selectively altering fluid-flow during a liquid chromatography run. In one aspect, a mobile phase gradient is generated and introduced into an LC conduit without splitting. After sample components are eluted from the LC conduit (e.g., after the last sample analyte peak is detected), flow rate of the mobile phase is increased prior to introduction into the LC conduit. A portion of the mobile phase is diverted to a waste conduit, while the remaining portion is introduced into the LC conduit. In one aspect, the remaining portion is introduced at a lower flow rate into the LC conduit compared to the flow rate of the mobile phase being diverted and/or to the mobile phase initially flowing to the LC (e.g., prior to the split). Sample components eluting from the LC conduit may be detected, isolated or further separated on-chip or off-chip. In still other aspects, fluid flow (e.g., such as rates of flow) through one or more fluid-transporting features of the device is monitored. In one aspect, fluid flow to one or more of: the waste conduit, LC conduit, and/or from a conduit in communication with a pressure pump is monitored.

The objects and features of the invention can be better understood with reference to the following detailed description and accompanying drawings. The Figures shown herein are not necessarily drawn to scale, with some components and features being exaggerated for clarity.

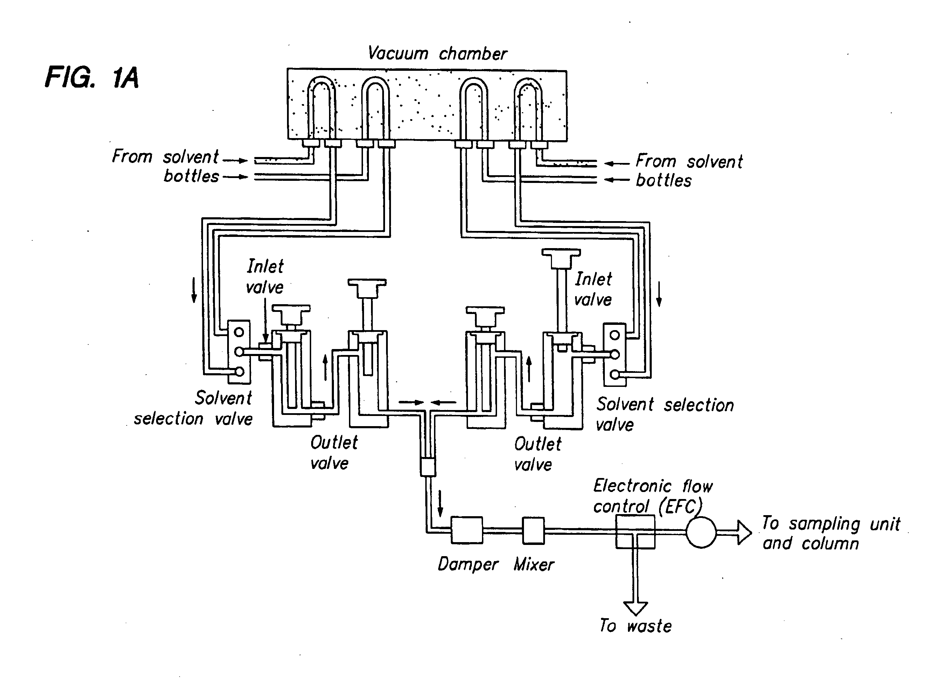

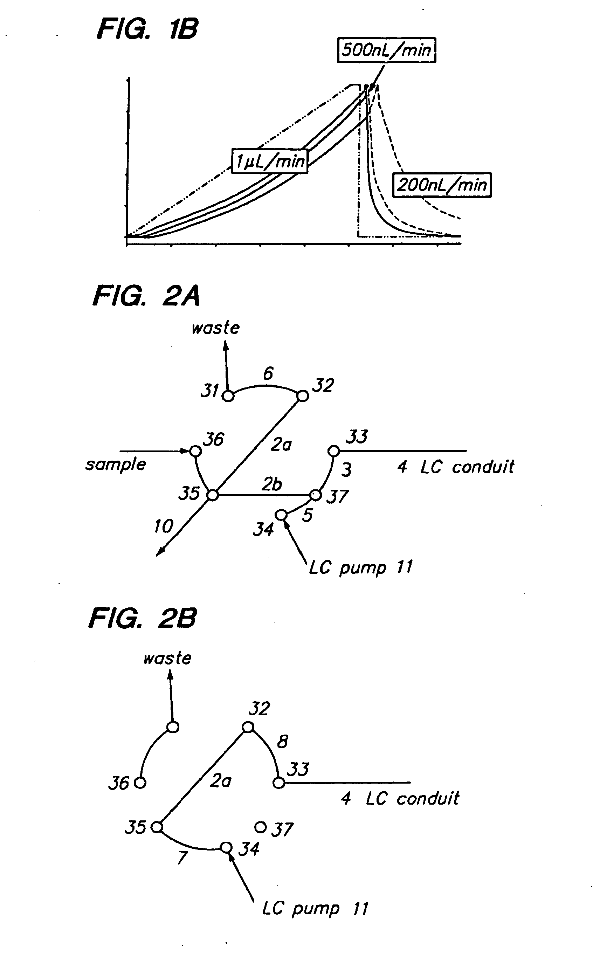

Figure 1A shows a conventional active split gradient liquid chromatography pump according to the prior art. Figure 1B illustrates the relationship between delay time and flow rate and the decrease in recovery time with a faster flow rate.

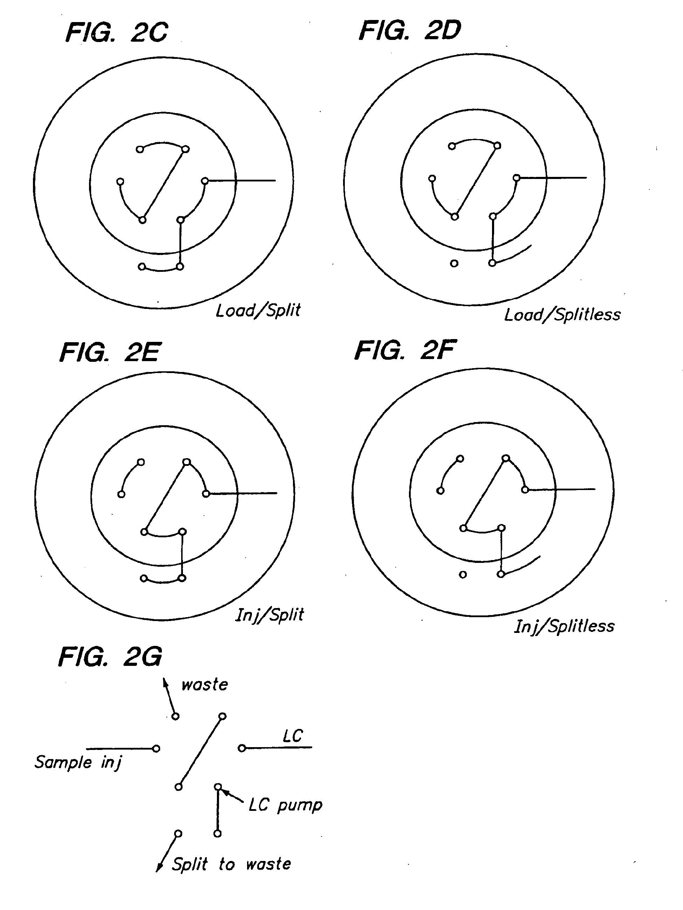

Figures 2A-B are schematic diagrams showing a top view of a microfluidic device according to one aspect of the invention and a switching structure used to selectively control mobile phase splitting during a chromatography procedure. Figures 2C-F are schematic diagrams showing a top view of another configuration of a microfluidic device disclosed in this application, which does not reflect the present invention. Figure 2A shows a split configuration in which sample is loaded into a fluid-transporting feature of the device and directed to an LC conduit, while Figure 2B shows a non-split configuration used to establish a gradient of organic solvents in the LC conduit. Figures 2C-F show a top view of a microfluidic device according to an aspect of the application comprising two switching structures for activating splitting independently from sample injection. Four configurations are possible. Figure 2G is a key illustrating functions of various fluid-transporting features in Figures 2C-F.

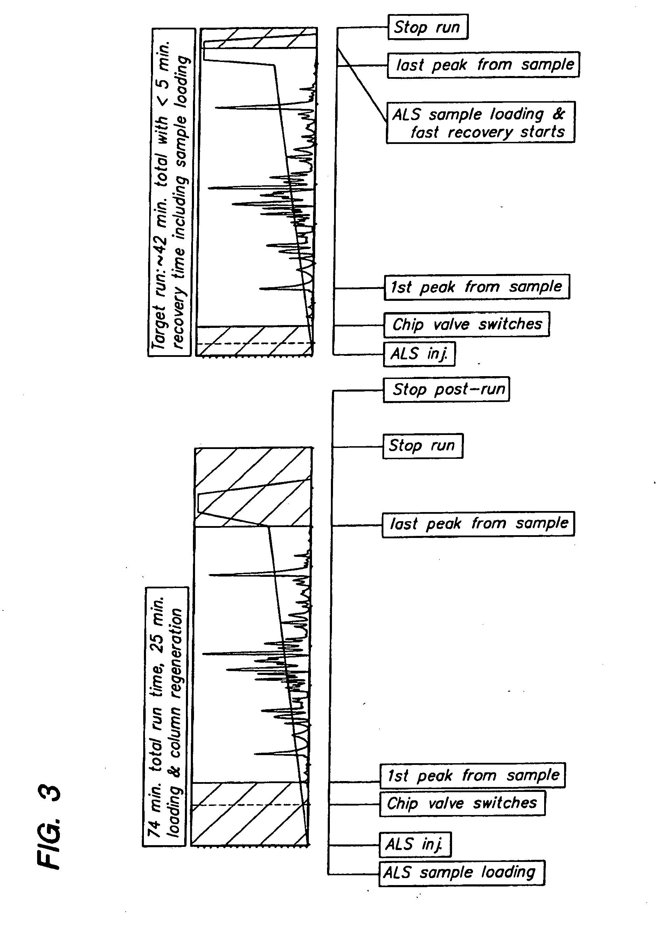

Figure 3 is a flow diagram illustrating a method of the application showing a first phase of a chromatography process conducted without splitting a mobile phase prior to a separation run (left hand side of the Figure) and a second phase in which a mobile phase is split prior to a sample run (right hand side of the Figure). The upper portion of the Figure illustrates the decrease in run time and recovery time observed after splitting.

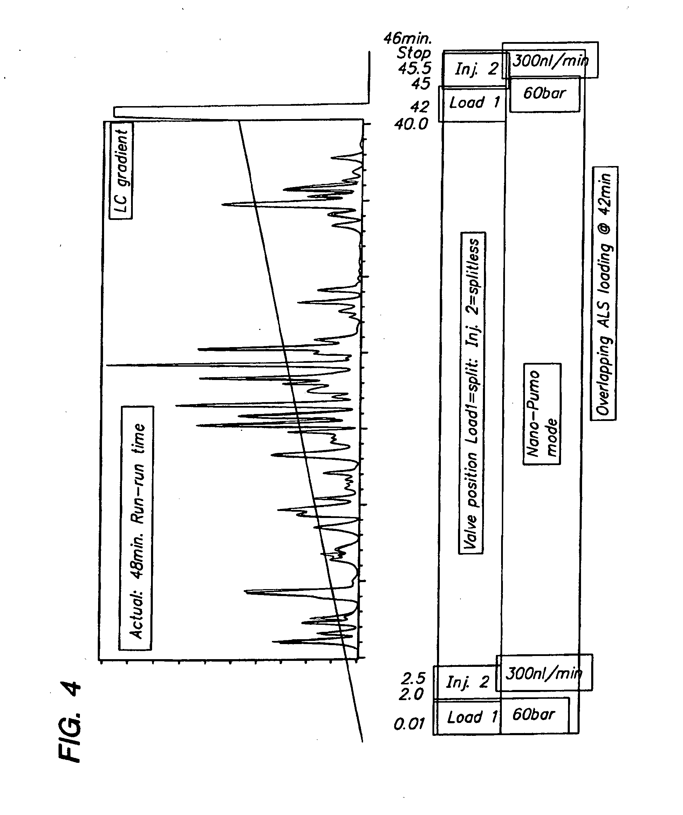

Figure 4 is a graph, which plots three repeated LC runs using a microfluidic device as shown in Figures 2C-F. A total of 83% duty cycle is demonstrated.

Unless defined otherwise below, all technical and scientific terms used herein have the same meaning as commonly understood by one of ordinary skill in the art to which this invention belongs. Still, certain elements are defined herein for the sake of clarity.

It must be noted that, as used in the specification and the appended claims, the singular forms "a," "an" and "the" include plural referents unless the context clearly dictates otherwise. Thus, for example, reference to "a microchannel" includes a plurality of microchannels, reference to "a fluid" includes a mixture of fluids, and reference to "a component property" includes a plurality of component properties and the like.

The following definitions are provided for specific terms that are used in the following written description.

A "biopolymer" is a polymer of one or more types of repeating units. Biopolymers are typically found in biological systems and particularly include polysaccharides (such as carbohydrates), peptides (which term is used to include polypeptides and proteins, such as antibodies or antigen-binding proteins), glycans, proteoglycans, lipids, sphingolipids, and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in hydrogen bonding interactions, such as Watson-Crick type, Wobble type and the like. In some cases the backbone of the biopolymer may be branched. Biopolymers may be heterogeneous in backbone composition thereby containing any possible combination of polymer units linked together such as peptide- nucleic acids (which have amino acids linked to nucleic acids and have enhanced stability). As used herein with respect to linked units of a biopolymer, "linked" or "linkage" means two entities are bound to one another by any physicochemical means. Such linkages are well known to those of ordinary skill in the art and include, but are not limited to, amide, ester and thioester linkages. Linkages include synthetic or modified linkages.

A "set" or "sub-set" of any item (such as a set of proteins or peptides) may contain only one of the item, or only two, or three, or any multiple number of the items.

As used herein, a "peptide mixture" is typically a complex mixture of peptides obtained as a result of the cleavage of a sample comprising proteins.

As used herein, a "sample of proteins" is typically any complex mixture of proteins and/or their modified and/or processed forms, which may be obtained from sources, including, without limitation: a cell sample (e.g., lysate, suspension, collection of adherent cells on a culture plate, a scraping, a fragment or slice of tissue, a tumor, biopsy sample, an archival cell or tissue sample, laser-capture dissected cells, etc), an organism (e.g., a microorganism such as a bacteria or yeast), a subcellular fraction (e.g., comprising organelles such as nuclei or mitochondria, large protein complexes such as ribosomes or golgi, and the like), an egg, sperm, embryo, a biological fluid fluid, viruses, and the like.

The term "peptide" as used herein refers to an entity comprising at least one peptide bond, and can comprise either D and/or L amino acids. Ideally, the ligand is a peptide consisting essentially of about 2 to about 20 amino acids (e.g., about 2, 3, 4, 5, 6, 7, 8, 9, or 10 amino acids).

"Protein", as used herein, means any protein, including, but not limited to peptides, enzymes, glycoproteins, hormones, receptors, antigens, antibodies, growth factors, etc., without limitation. Proteins include those comprised of greater than about 20 amino acids, greater than about 35 amino acid residues, or greater than about 50 amino acid residues. The terms "polypeptide" and "protein" are generally used interchangeably herein. Further, unless context indicates otherwise, a method and/or device and/or system being described for manipulation (e.g., separation, transfer, analysis, detection) of proteins samples may also be used for peptide manipulation.

As used herein, a "a biological fluid" includes, but is not limited to, blood, plasma, serum, sputum, urine, tears, saliva, sputum, cerebrospinal fluid, lavages, leukapheresis samples, milk, ductal fluid, perspiration, lymph, semen, umbilical cord fluid, and amniotic fluid, as well as fluid obtained by culturing cells, such as fermentation broth and cell culture medium.

As used herein, "a sample of complex proteins" may contain greater than about 100, about 500, about 1,000, about 5,000, about 10,000, about 20,000, about 30,000, about 100,000 or more different proteins. Such samples may be derived from a natural biological source (e.g., cells, tissue, bodily fluid, soil or water sample, and the like) or may be artificially generated (e.g., by combining one or more samples of natural and/or synthetic or recombinant sources of proteins).

The term "proteome" refer to the protein constituents expressed by a genome, typically represented at a given point in time. A "sub-proteome" is a portion or subset of the proteome, for example, the proteins involved in a selected metabolic pathway, or a set of proteins having a common enzymatic activity.

The term "microfluidic device" or "device" or "microfabricated device" refers to a device having features of micron or submicron dimensions, and which can be used in any number of chemical processes involving very small amounts of fluid. Such processes include, but are not limited to, electrophoresis (e.g., capillary electrophoresis or CE), chromatography (e.g., µLC), screening and diagnostics (using, e.g., hybridization or other binding means), and chemical and biochemical synthesis (e.g., DNA amplification as may be conducted using the polymerase chain reaction, or "PCR") and analysis (e.g., through enzymatic digestion). The features of the microfluidic devices are adapted to the particular use. For example, microfluidic devices that are used in separation processes, e.g., CE, contain channels (termed "conduits" herein when enclosed, i.e., when the cover plate is in place on the channel-containing substrate surface) on the order of 1 µm to 200 µm in diameter, typically 10 µm to 75 µm in diameter, and approximately 0.1 to 50 cm in length. Microfluidic devices that are used in chemical and biochemical synthesis, e.g., DNA amplification, will generally contain reaction zones (termed "reaction chambers" herein when enclosed, i.e., again, when the cover plate is in place on the channel-containing substrate surface) having a volume of about 1 nl to about 100 µl, typically about 10 nl to 20 µl.

The term "channel" or "microchannel" or "nanochannel" as used herein refers to a passage through a substrate and is used interchangeably with the terms "groove," "trough," or trench." The geometry of a channel may vary widely and includes tubular passages with circular, rectangular, square, D-shaped, trapezoidal or other polygonal cross- sections. A channel may comprise varying channel geometries (e.g., rectangular at one section and trapezoidal at another section). However, in one aspect, the cross-sectional area of a channel used for separation is substantially constant in order to further reduce dead volume.

Channels may form curved or angular paths through the substrate, and they may cross or intersect with other channels, and in various embodiments they can be substantially parallel to one another. An at least partially enclosed channel (e.g., one formed by a channel in a substrate which is covered) is referred to herein as a "conduit." In general, the geometry of a conduit may vary and the term is used interchangeably herein with "fluid-transporting feature."

The term "embossing" is used to refer to a process for forming polymer, metal or ceramic shapes by bringing an embossing die into contact with a pre-existing blank of polymer, metal or ceramic. A controlled force is applied to the embossing die and such that the pattern and shape determined by the embossing die is pressed into the pre-existing blank of polymer, metal or ceramic. The term "embossing" encompasses "hot embossing," which is used to refer to a process for forming polymer, metal or ceramic shapes by bringing an embossing die into contact with a heated pre-existing blank of polymer, metal or ceramic. The pre-existing blank of material is heated such that it conforms to the embossing die as a controlled force is applied to the embossing die. The resulting polymer, metal or ceramic shape is cooled and then removed from the embossing die.

The term "injection molding" is used to refer to a process for molding plastic or nonplastic ceramic shapes by injecting a measured quantity of a molten plastic or ceramic substrate into a die (or mold). In one embodiment of the present invention, miniaturized devices can be produced using injection molding.

The term "LIGA process" is used to refer to a process for fabricating microstructures having high aspect ratios and increased structural precision using synchrotron radiation lithography, galvanoforming, and plastic molding. In a LIGA process, radiation sensitive plastics are lithographically irradiated with high energy radiation using a synchrotron source to create desired microstructures (such as channels, ports, apertures, and microalignment means), thereby forming a primary template.

The term "microalignment means" or "alignment means" is defined herein to refer to any means for ensuring the precise microalignment of microfabricated features in a device. Microalignment means can be formed either by laser ablation or by other methods of fabricating shaped pieces well known in the art. Representative microalignment means that can be employed herein include a plurality of appropriately arranged protrusions in component parts, e.g., projections, depressions, grooves, ridges, guides, or the like.

The term "in order" is used herein to refer to a sequence of events. When a fluid travels "in order" through an inlet port and a conduit, the fluid travels through the inlet port before traveling through the conduit. "In order" does not necessarily mean consecutively. For example, a fluid traveling in order through an inlet port and outlet port does not preclude the fluid from traveling through a conduit after traveling through the inlet port and before traveling through the outlet port.

The term "constructed" as used herein refers to forming, assembling, modifying or combining components in order to build at least a portion of the inventive device. Thus, "a conduit constructed for separating" as used herein refers to assembling or combining parts to form a conduit or modifying a surface of a conduit, wherein the conduit serves to differentiate or discriminate sample fluid components. For example, a conduit constructed for separating the components of a fluid sample may have a chemically, mechanically or energetically modified interior surface that interacts with different components differently, or may contain separating media such as chromatographic packing material.

The term "controllably introduce" as used herein refers to the delivery of a predetermined volume of a fluid sample in a precise and accurate manner. A fluid sample may be "controllably introduced" through controllable alignment of two components of a device, i.e., fluid-transporting features.

The term "controllable alignment" as used herein refers to the spatial relationship between at least two components of a device, e.g., fluid-transporting features, wherein the spatial relationship may be adjusted according to a desired function of the device.

"Slidable contact" as used herein refers to the state or condition of touching between two solid members wherein the relative position of the members may be altered without physically separating the two members.

The term "flow path" as used herein refers to the route or course along which a fluid travels or moves. Flow paths are formed from one or more fluid-transporting features of a device.

The term "fluid-transporting feature" as used herein refers to an arrangement of solid bodies or portions thereof that direct fluid flow. Fluid-transporting features include, but are not limited to, chambers, reservoirs, conduits and channels. The term "conduit" as used herein refers to a three-dimensional enclosure formed by one or more walls and having an inlet opening and an outlet opening through which fluid may be transported. The term "channel" is used herein to refer to an open groove or a trench in a surface. A channel in combination with a solid piece over the channel forms a conduit. However, unless context indicates otherwise, the terms "fluid-transporting feature", "channel", "reservoir" and "conduit" are used interchangeably.

As used herein, the term "upstream" refers to a position or region on a microfluidic device defined by a direction of fluid flow relative to another position. For example, a fluid-transporting feature upstream of another fluid-transporting feature provides fluid to the downstream fluid -transporting feature, either directly or through connecting fluid-transporting feature(s). A fluid-transporting feature upstream of another fluid transporting feature may be on the same substrate or on a different substrate (e.g., such as a switching structure of the device).

The term "fluid-tight" is used herein to describe the spatial relationship between two solid surfaces in physical contact such that fluid is prevented from flowing into the interface between the surfaces.

As used herein, a "peak" or a "band" or a "zone" in reference to a chromatographic separation means a region where a separated compound is concentrated. A "chromatogram" is a series of bands or zones or peaks detected by a detection system capable of being displayed as a chart or graph or plot of signal intensity versus time. Chromatogram is used in a generic sense so that it includes more specialized terms such as "electrochromatogram" which are sometimes used to describe the separation of compounds by particular chromatographic techniques, such as electrochromatography.

As used herein, "normal phase chromatographic separation" refers to separation that operates on the basis of hydrophilicity and lipophilicity by using a polar stationary phase and a less polar mobile phase. Thus hydrophobic compounds elute more quickly than do hydrophilic compounds. Exemplary groups on a solid phase for normal phase chromatography are amine (--NH2) and hydroxyl (--OH) groups.

As used herein, "reverse phase" refers to separation that operates on the basis of hydrophilicity and lipophilicity. The stationary phase can consist of silica-based packings with n-alkyl chains (e.g., C-8 or C-18) or phenyl groups covalently bound. The more hydrophobic the stationary phase, the greater is the tendency of the column to retain hydrophobic moieties. Thus hydrophilic compounds elute more quickly than do hydrophobic compounds.

"Communicating information" refers to transmitting the data representing that information as signals (e.g., electrical, optical, radio, magnetic, etc) over a suitable communication channel (e.g., a private or public network).

As used herein, a component of a system which is "in communication with" or "communicates with" another component of a system receives input from that component and/or provides an output to that component to implement a system function. A component which is "in communication with" or which "communicates with" another component may be, but is not necessarily, physically connected to the other component. For example, the component may communicate information to the other component and/or receive information from the other component. "Input" or "Output" may be in the form of electrical signals, light, data (e.g., spectral data), materials, or may be in the form of an action taken by the system or component of the system or may be in the form of a material (e.g., such as a fluid) being transported from one component to another (directly or indirectly). The term "in communication with" also encompasses a physical connection that may be direct or indirect between one system and another or one component of a system and another.

A "computer-based system" refers to the hardware means, software means, and data storage means used to analyze the information of the present invention. The minimum hardware of the computer-based systems of the present invention comprises a central processing unit (CPU), input means, output means, and data storage means. A skilled artisan can readily appreciate that any one of the currently available computer-based system are suitable for use in the present invention. The data storage means may comprise any manufacture comprising a recording of the present information as described above, or a memory access means that can access such a manufacture. In certain instances a computer-based system may include one or more wireless devices.

To "record" data, programming or other information on a computer readable medium refers to a process for storing information, using any such methods as known in the art. Any convenient data storage structure may be chosen, based on the means used to access the stored information. A variety of data processor programs and formats can be used for storage, e.g. word processing text file, database format, etc.

A "processor" references any hardware and/or software combination that will perform the functions required of it. For example, any processor herein may be a programmable digital microprocessor such as available in the form of an electronic controller, mainframe, server or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic medium or optical disk may carry the programming, and can be read by a suitable reader communicating with each processor at its corresponding station.

As used herein, a "database" is a collection of information or facts organized according to a data model that determines whether the data is ordered using linked files, hierarchically, according to relational tables, or according to some other model determined by the system operator.

As used herein, an "information management system" refers to a program, or series of programs, which can search a database and determine relationships between data identified as a result of such a search.

As used herein, an "interface on the display of a user device" or "user interface" or "graphical user interface" is a display (comprising text and/or graphical information) displayed by the screen or monitor of a user device connectable to the network which enables a user to interact with a system processor and/or system memory (e.g., including a data base and information management system).

As used herein, "providing access to at least a portion of a database" refers to making information in the database available to user(s) through a visual or auditory means of communication.

As used herein, the term "separation media" refers to a media in which a separation of sample components takes place.

As used herein, "a cleaving agent immobilized in a fluid-transporting feature" refers to a stable association of a cleaving agent with a fluid-transporting feature for a period of time necessary to achieve at least partial digestion of a sample placed in the fluid-transporting feature (e.g., a period of time which allows at least 1 % of the sample to be digested). Immobilization need not be permanent. For example, in one aspect, a cleaving agent can be immobilized on magnetic beads that can be selectively delivered to and removed from the fluid-transporting feature by controlling the exposure of the fluid-transporting feature to a magnetic field. The cleaving agent also can move within the channel so long as it remains within the fluid-transporting feature.

The term "assessing" and "evaluating" are used interchangeably to refer to any form of measurement, and includes determining if an element is present or not. The terms "determining," "measuring," and "assessing," and "assaying" are used interchangeably and include both quantitative and qualitative determinations. Assessing may be relative or absolute. "Assessing the presence of" includes determining the amount of something present, as well as determining whether it is present or absent.

The term "using" has its conventional meaning, and, as such, means employing, e.g. putting into service, a method or composition to attain an end.

In one aspect, the application relates to a microfluidic device comprising a fluid-transporting conduit comprising a stationary phase ("LC conduit"), which is in communication with at least one mobile phase transporting conduit. The device comprises a splitting region upstream of an inlet of the LC conduit, for diverting a portion of a mobile phase to a waste reservoir prior to introduction of the mobile phase into the introduction portion of the LC conduit. The device further comprises a mechanism for selectively controlling splitting. In one aspect, an LC gradient is run without splitting. After sample components are eluted from the LC conduit into a conduit downstream of the LC conduit, flow rate through the mobile phase-transporting conduit is increased and the portion of the fluid flowing through the mobile phase transporting conduit is split at the splitting region, diverting a portion of the mobile phase to the waste reservoir, while permitting the remaining portion of the mobile phase to proceed to the inlet of the LC conduit.

In one embodiment, the microfluidic device comprises a first substrate having first and second opposing surfaces. The substrate comprises a separation channel formed in the first surface for performing liquid chromatography that communicates with a channel for introducing a mobile phase and/or sample analyte into the separation channel. In one aspect, the separation channel further comprises a stationary phase for separating analytes according to a characteristic of the analyte (e.g., such as hydrophobicity).

A cover plate is arranged over the first surface and, in combination with the channels on the substrate, defines conduits through which fluids may flow. A mobile phase-transporting conduit is defined by the mobile phase-transporting channel and cover, while an LC conduit is defined by the LC channel and cover. Alternatively, or additionally, the cover plate may comprise a channel, which is aligned with the first channel on the first surface, such that a given conduit is formed from two opposing channels. In such embodiments, functional components, e.g., such as a stationary phase may be provided in or on the surface of channels in the cover plate. In other aspects, the stationary phase is applied to a surface of the cover and is not necessarily present in the underlying LC channel.

Covers may be bonded to substrates using methods known in the art such as anodic bonding, sodium silicate bonding, fusion bonding or by glass bonding.

To ensure that a conduit is fluid-tight, pressure-sealing techniques may be employed, e.g., by using external means (such as clips, tension springs or an associated clamp), by using internal means (such as male and female couplings) or by using of chemical means (e.g., adhesive or welding) to urge the pieces together. However, as with all embodiments described herein the pressure sealing techniques may allow the contacts surfaces to remain in fluid-tight contact under an internal device fluid pressure of up to about 100 megapascals, typically about 0.5 to about 40 megapascals.

Alternatively, the substrate and the cover plate may be formed in a single, solid flexible piece. Devices having a single-piece substrate and cover plate configuration have been described, e.g., in U.S. Patent Nos. 5,658,413 and 5,882,571.

Suitable materials for forming the substrate and cover plate are selected with regard to physical and chemical characteristics that are desirable for proper functioning of the microfluidic device. In one embodiment, the substrate is fabricated from a material that enables formation of high definition (or high "resolution") features, i.e., channels, chambers and the like, that are of micron or submicron dimensions. That is, the material must be capable of microfabrication using, e.g., dry etching, wet etching, laser etching, laser ablation, molding, embossing, or the like, so as to have desired miniaturized surface features; preferably, the substrate is capable of being microfabricated in such a manner as to form features in, on and/or through the surface of the substrate. Microstructures can also be formed on the surface of a substrate by adding material thereto, for example, polymer channels can be formed on the surface of a glass substrate using photo-imageable polyimide. Also, all device materials used should be chemically inert and physically stable with respect to any substance with which they comes into contact when used to introduce a fluid sample (e.g., with respect to pH, electric fields, etc.). Suitable materials for forming the present devices include, but are not limited to, polymeric materials, ceramics (including aluminum oxide and the like), glass, metals, composites, and laminates thereof.

Polymeric materials are particularly preferred herein, and will typically be organic polymers that are homopolymers or copolymers, naturally occurring or synthetic, crosslinked or uncrosslinked. Specific polymers of interest include, but are not limited to, polyimides, polycarbonates, polyesters, polyamides, polyethers, polyurethanes, polyfluorocarbons, polystyrenes, poly(acrylonitrile-butadiene-styrene)(ABS), acrylate and acrylic acid polymers such as polymethyl methacrylate, and other substituted and unsubstituted polyolefins, and copolymers thereof. Generally, at least one of the substrate or cover plate comprises a biofouling-resistant polymer when the device is employed to transport biological fluids. Polyimide is of particular interest and has proven to be a highly desirable substrate material in a number of contexts. Polyimides are commercially available, e.g., under the trade name Kapton®, (DuPont, Wilmington, DE) and Upilex® (Ube Industries, Ltd., Japan). Polyetheretherketones (PEEK) also exhibit desirable biofouling resistant properties.

The devices of the invention may also be fabricated from a "composite," i.e., a composition comprised of unlike materials. The composite may be a block composite, e.g., an A-B-A block composite, an A-B-C block composite, or the like. Alternatively, the composite may be a heterogeneous combination of materials, i.e., in which the materials are distinct from separate phases, or a homogeneous combination of unlike materials. As used herein, the term "composite" is used to include a "laminate" composite. A "laminate" refers to a composite material formed from several different bonded layers of identical or different materials. Other preferred composite substrates include polymer laminates, polymer-metal laminates, e.g., polymer coated with copper, a ceramic-in-metal or a polymer-in-metal composite. One preferred composite material is a polyimide laminate formed from a first layer of polyimide such as Kapton®, that has been co-extruded with a second, thin layer of a thermal adhesive form of polyimide known as KJ®, also available from DuPont (Wilmington, Delaware).

In certain aspects, a substrate and/or cover of the device comprises an at least partially transparent material.

The present devices can be fabricated using any convenient method, including, but not limited to, micromolding and casting techniques, embossing methods, surface micro-machining and bulk-micromachining. The latter technique involves formation of microstructures by etching directly into a bulk material, typically using wet chemical etching or reactive ion etching ("RIE"). Surface micro-machining involves fabrication from films deposited on the surface of a substrate. An exemplary surface micro-machining process is known as "LIGA." See, for example, Becker et al. (1986), "Fabrication of Microstructures with High Aspect Ratios and Great Structural Heights by Synchrotron Radiation Lithography Galvanoforming, and Plastic Moulding (LIGA Process)," Microelectronic Engineering 4(1):35-36; Ehrfeld et al. (1988), "1988 LIGA Process: Sensor Construction Techniques via X-Ray Lithography," Tech. Digest from IEEE Solid-State Sensor and Actuator Workshop, Hilton Head, SC; Guckel et al. (1991) J. Micromech. Microeng. 1: 135-138. LIGA involves deposition of a relatively thick layer of an X-ray resist on a substrate followed by exposure to high-energy X-ray radiation through an X-ray mask, and removal of the irradiated resist portions using a chemical developer. The LIGA mold so provided can be used to prepare structures having horizontal dimensions-i.e., diameters--on the order of microns.

Another technique for preparing the present devices is laser ablation. In laser ablation, short pulses of intense ultraviolet light are absorbed in a thin surface layer of material. Preferred pulse energies are greater than about 100 millijoules per square centimeter and pulse durations are shorter than about 1 microsecond. Under these conditions, the intense ultraviolet light photo-dissociates the chemical bonds in the substrate surface. The absorbed ultraviolet energy is concentrated in such a small volume of material that it rapidly heats the dissociated fragments and ejects them away from the substrate surface. Because these processes occur so quickly, there is no time for heat to propagate to the surrounding material. As a result, the surrounding region is not melted or otherwise damaged, and the perimeter of ablated features can replicate the shape of the incident optical beam with precision on the scale of about one micron or less. Laser ablation will typically involve use of a high-energy photon laser such as an excimer laser of the F₂, ArF, KrCl, KrF, or XeCl type. However, other ultraviolet light sources with substantially the same optical wavelengths and energy densities may be used as well. Laser ablation techniques are described, for example, by Znotins et al. (1987) Laser Focus Electro Optics, at pp. 54-70, and in U.S. Patent Nos. 5,291,226 and 5,305,015 to Schantz et al.

In one aspect, the fabrication technique that is used provides for features of sufficiently high definition, i.e., microscale components, channels, chambers, etc., such that precise "microalignment" of these features is possible, i.e., the features are capable of precise and accurate alignment, including, for example, the alignment of complementary channels with each other, the alignment of projections and mating depressions, the alignment of grooves and mating ridges, and the like. In one aspect, a feature for alignment on a first substrate may be mated to a receiving feature on one or more covers and/or additional substrates. In this way, a cover and/or substrate may be aligned. As defined herein, a receiving feature is any feature that can be associated with an aligning feature. For example, a receiving feature that can be associated with a projection or ridge may comprise a depression or groove while a receiving feature, which can be associated with a depression or groove, may comprise a projection or ridge. A receiving feature may be any feature of suitable geometry that may maintain alignment of a cover or substrate during a procedure on a substrate of the device such as a separation procedure.

The geometry and dimensions of conduits can be varied to suit a particular application. For example, for an LC conduit, a shorter channel will decrease the distance over which sample bands must be transported, but generally the channel should be long enough to provide adequate separation of sample bands given a particular separation methodology being used.

Fluid flow in fluid-transporting features such as the mobile phase-transporting conduit and the LC conduit can be controlled by a number of mechanisms known in the art. Such mechanisms include, but are not limited to, generating a pressure differential at different regions of a fluid-transporting feature or by applying electroosmotic or electrokinetic forces. One or more of these mechanisms can be used. In one aspect, fluid flow in at least two features is independently controlled.

As discussed above, in one embodiment, the LC conduit comprises a separation media. The separation medium may comprise a resin, beads or other form of a particulate solid phase or may comprise a monolithic structure formed in the channel comprising a chromatographically active material or a combination thereof. In certain aspects, a separation medium may comprise a coating on wall(s) of the channel and/or cover, which comprises a chromatographically active material such as a stationary phase. Thus, the interior surface of the conduit may exhibit surface characteristics such adsorption properties and surface area similar to that associated with packing materials used in column chromatography techniques. In certain aspects, a separation conduit exhibits a high surface area-to-volume ratio. In one aspect, a separation medium comprises a chromatographic packing material comprising a surface area of about 100 to about 500 m²/g.

A separation medium may be injected or otherwise introduced into a fluid-transporting feature of the device before or after a cover affixed to a substrate. However, in certain aspects, the separation medium is formed in situ in the feature. In still other aspects, a separation medium is packed into a fluid-transporting feature by applying voltages differences or pressure differences at selected features or regions of features. In further aspects, a separation medium comprises particles that are magnetic, paramagnetic or superparamagnetic, and can be added to or removed from features using a magnetic field applied to selective regions of the device.

In one embodiment, the separation medium comprises a stationary phase through which a mobile phase may be flowed. In one aspect, the stationary phase comprises a hydrophobic surface and the mobile phase comprises a mixture of water and organic solvent. In this aspect, the separation medium separates by hydropobcity, as the least hydrophobic component moves through the chromatography bed first, followed by other components, in order of increasing hydrophobicity. In certain aspect, stationary phases comprise n-alkyl chains (e.g., C-8 or C-18) or phenyl groups. In other aspects, stationary phases are relatively polar, and comprise amine (--NH2) and hydroxyl (--OH) groups.

In certain embodiments, when chromatography packing material is slurry packed within the LC conduit, a frit structure, micromachined or otherwise, may be included near or at the outlet of the LC conduit. The frit structure serves to ensure that the packing material is not displaced from within the conduit when a fluid sample and/or a mobile phase are conveyed through the conduit. In one aspect, the cross-sectional area of flow-transporting feature(s) downstream of the LC conduit is reduced. For example, in one aspect, the LC conduit interfaces at an outlet with an electrospray tip comprising a reduced cross-sectional area compared to the cross-sectional area of the LC conduit.

In certain embodiments, the device includes temperature control mechanisms for modulating temperature in one or more of the mobile phase-transporting conduit, LC conduit, and one or more other fluid-transporting features of the device.

Sample components that may be separated by the LC conduit include, but are not limited to, biopolymers (e.g., nucleic acids or modified or derivative or analogous forms thereof, such as DNA, RNA, PNA, UNA and LNA molecules; proteins, polypeptides, or peptides or modified or derivative or mimetic forms thereof; and carbohydrates) as well as small molecules, organic and inorganic compounds, mass tag modified compounds, derivatized compounds, and the like. In certain aspects, a sample comprises labeled components that may be detected by a detector in suitable proximity to the LC conduit or to fluid-transporting features downstream of the LC conduit to detect and distinguish signals relating to sample components from background signal.

As discussed above, the LC conduit communicates with an upstream mobile phase-transporting conduit. In one aspect, the device additionally includes a mechanism for generating a gradient of one or more mobile phase components (e.g., such as a solvent). In another aspect, the gradient-forming mechanism is an integral part of the device. In a one aspect, one or more of inlet ports is arranged along the length of the mobile phase-transporting conduit, for introducing different concentrations of a mobile phase component into the mobile phase-transporting conduit. In another aspect, plugs of mobile phase from mobile phase sources are introduced through the one or more inlet ports into the mobile phase-transporting conduit such that the plugs are arranged in a predetermined order along the length of the mobile-phase holding conduit.

In one embodiment, a gradient is formed which ranges from 2% acetonitrile (ACN) to 42% ACN.

In one aspect, the mobile phase is pumped through the capillary column using an applied electric field to create an electro-osmotic flow, similar to that in CZE. In another aspect, the mobile phase is pumped through the capillary column using a high pressure mechanical pump.

In one embodiment, the dimensions of the microfluidic device are such that microliter volumes of fluid are used to produce a mobile phase containing a gradient of the selected mobile-phase component. In one aspect, no more than about 20 µL of fluid is used to produce the gradient-containing mobile phase.

In one embodiment, a fluid flow rate regulator for regulating flow rate is employed to ensure that a mobile phase is delivered to an LC conduit at an appropriate rate and pressure. Such flow rate regulators may be interposed in the flow path between a mobile phase source and a sample source and an LC conduit. The flow rate regulator may also include a flow splitter and in one aspect, the flow through the flow splitter is controllable by a switching structure for selectively providing fluid to downstream conduits such as the LC conduit (see, e.g., as shown in Figures 2A and B). Additionally, one or more flow sensors for determining and optionally controlling the rate of fluid flow into conduits and other fluid-transporting features can be provided. Similarly, the device may include a mobile phase source comprising a mixer for mixing solvents prior to introduction of solvents into the mobile phase conduit (or inlet ports which provide fluid to the mobile phase conduit).

In one embodiment, selective on-chip flow splitting is used to modulate fluid flow through the LC conduit. In one aspect, the mechanism for selectively controlling splitting comprises a switching structure comprising a plate, which at least partially overlies the device and which can be moved from a first position to at least a second position.

A switching structure can be aligned over a contact surface of an underlying substrate/cover by guides protruding therefrom or other alignment features. In one aspect, at least a portion of a fluid-transporting feature in the switching structure is alignable with at least a portion of a fluid-transporting feature of an underlying substrate such that movement of the switching structure (e.g., sliding and/or rotation) allows fluid communication between the fluid-transporting features in a first alignment position. Movement to a second alignment position may alter fluid communication. In one aspect, movement to a second alignment position prevents fluid communication between a substrate fluid-transporting feature and a fluid transporting feature of the switching structure. Methods of fabricating and aligning switching structures with underlying substrates are disclosed in U.S. Patent Publications 20030224531 and 20030159993, for example.

To ensure that contact between the switching structure and substrate/cover is fluid-tight, pressure-sealing techniques may be employed, e.g., by using external means to urge the pieces together (such as clips, tension springs or a clamping apparatus). However, excessive pressure that precludes the substrate/cover and switching structure from slidable contact should be avoided. The optimal pressure can be determined through routine experimentation. However, as with all embodiments described herein, such pressure sealing techniques may allow the contact surfaces to remain in fluid-tight contact under an internal device fluid pressure of up to about 100 megapascals, typically about 0.5 to about 40 megapascals. The switching structure may be fabricated from materials, which are the same as or similar to those used to fabricate the substrate and/or cover of the device. In certain aspects, the switching structure comprises a handle that provides for ease in manipulation of the switching structure.

The switching structure comprises at least one fluid-transporting feature (e.g., a conduit, port, reservoir, etc) for connecting (either directly or indirectly) a mobile phase-transporting conduit to the LC conduit without splitting or to a splitting region, where the mobile phase is split prior to introduction to the LC conduit. In one aspect, fluid-transporting features used to split fluid flow are formed in the switching structure.

The switching structure employs motion (e.g., such as rotational or linear motion, or a combination thereof) to effect flow path switching to change the device from a non-splitting configuration to a splitting configuration. In one aspect, the switching structure comprises a structure comprising a first surface and a second surface that is capable of interfacing closely with a contact surface of the device (e.g., the substrate and/or cover), to achieve fluid-tight contact between the surfaces. In the present invention as shown in Figure 2A, the switching structure or rotor is rotatable about an axis perpendicular to the plane of the substrate/cover and can be used to connect otherwise unconnected fluid-transporting conduits of the device via a connecting conduit within or on the switching structure. Figures 2A and 2B are top down views of relationships between fluid-transporting features of the device. Features 1, 3, 5, and 6 are on the valve rotor, which in this embodiment, is under the chip device (comprising a first and second substrate). Features 2a and 4 are within the chip while 2b is on a top surface of the upper substrate of the chip. Features 31, 34, 36, and 37 are through holes extending through the chip. Features 32, 33, and 35 are holes or openings which only communicate with the rotor. For example, as shown in Figure 2A, when the switching structure is in a "split configuration" (e.g., during sample loading), fluid flow from mobile-phase LC pump 11 is split at feature 37 into two fluid-transporting features 3 and 2b. Fluid-transporting feature 2b directs a portion of fluid to a waste conduit via fluid transporting feature 10 and another portion of fluid to the LC conduit 4 via fluid-transporting feature 3. When the switching structure is in a "non-split configuration" as shown in Figure 2B, such as when a gradient of organic solvents is being run through the LC conduit 4, a fluid transporting feature for receiving the mobile phase connects with LC conduit 4 via fluid-transporting features 7, 2a and 8, but no longer connects with fluid transporting feature 5 and 2b and therefore no longer splits the flow.

In certain aspects, rate of fluid flow through various fluid-transporting features of the device can be modulated by altering connections between a pump, such as LC pump 11, and various fluid-transporting features that connect to the LC conduit 4. In one aspect, as shown in Figure 2A, in the split configuration, a fluid-transporting feature 2b receives fluid from an upstream conduit extending from LC pump 11 at a rate which is higher than the rate at which it provides fluid to a downstream conduit 4, e.g., it receives fluid at a rate of 1-50 µl/min, or in some instances about 4 µl/min, but provides fluid to the downstream conduit at a rate of 100-300nl/min, or in some instances, 300 nl/min.

In certain instances, the internal diameter of fluid transporting feature 2b is intermediate between that of an upstream conduit and a downstream conduit, and fluid flow through fluid-transporting feature 2b varies depending on its diameter and length. Thus, fluid-flow rates through the device and split ratio can be optimized. For example, in a split configuration, as shown in Figure 2A, fluid is delivered at a fixed pressure to the LC conduit 4 (e.g., at about 1-10 µl/min or as appropriate) for a desired time interval. The actual flow through LC conduit 4 after the split is about 200 nl/min-300 nl/min.

In certain embodiments, sample injection occurs coordinately with gradient formation. However, in the device shown in Figures 2C and 2D, in certain other aspects, flow splitting can be implemented independently of gradient formation, i.e., splitting can occur before, during, or after gradient formation. For example, as shown in Figures 2C-F, in one aspect of the device disclosed herewith that does not reflect the claimed invention, the device comprises two switching structures, arranged as concentric circles or an inner and outer rotor, which can be moved independently of one another. Movement of the switching structure can result in a split load or run configuration (Figures 2C and 2E) or a non-split load or run configuration (Figure 2D and 2F), i.e., four different orientations of fluid-transporting features. The outer rotor can activate on-chip flow switching. The inner rotor can be used to control loading/injection while the outer rotor can be used to control split/splitless configurations.

In one aspect, a first switching structure comprises a circular plate or cylindrical structure, while the second switching structure comprises a larger circular plate with a hole in which the first switching structure fits. In another aspect, the first switching structure overlies the second switching structure. Movement of the first switching structure (e.g., such as by rotation) can be used to connect otherwise non-connected fluid transporting feature(s) in the first switching structure and/or substrate/cover, such that in one position (the non-splitting configuration), the mobile phase- transporting conduit communicates with the LC conduit without splitting, while in a second position, flow from the mobile phase transporting feature is split and a portion is diverted to a diverting conduit in the second switching structure.

Other geometries are possible. For example, the first and second switching structures can be side-by-side, such that movement of a connecting conduit on a first structure from a first position to a second position can bring a mobile phase transporting feature in fluid communication with a diverting conduit on a second fluid-transporting feature on (or in) a second switching structure at a switching point to divert a portion of fluid flow from the mobile transporting feature to the diverting structure while the remaining portion is introduced into the LC conduit.

As with the underlying device, the fluid-transporting features of the switching structure(s) comprise a variety of geometries. For example, fluid transporting features can extend orthogonally through the switching structure, can be relatively parallel structures or can comprises circular or curved geometries. In one aspect, a fluid transporting feature comprises a first terminus and a second terminus. The first and second terminus may connect inlets or outlets of fluid-transporting features of an underlying substrate/cover. Rotating the switching structure may be used to selectively provide or prevent fluid communication between different fluid-transporting features.

In certain aspects, the switching structure may be used to controllably provide predetermined volumes of fluid to one or more fluid-transporting features on a substrate.

In addition to the mobile phase transporting conduit and the LC conduit, the device can comprise a plurality of fluid-transporting features that may be connected in a variety of geometries. For example, the substrate may comprise at least about 2, at least about 4, at least about 8, at least about 16, at least about 32, at least about 48, or at least about 96 fluid-transporting features in addition to the mobile phase transporting conduit and the LC conduit. In one aspect, the number of features corresponds to the number of wells in an industry standard microtiter plate. In another aspect, the center-to-center distance between features may correspond to the center-to-center distance of wells in an industry standard microtiter plate. In certain aspects, each feature comprises a sample introduction means which communications, either directly or indirectly with the LC conduit.

In one aspect, a device comprising 96 fluid-transporting features is interfaced to a 96-well microtiter plate, via 96 sample introduction means.

Additional conduits can be provided for performing additional separation procedures. For example, in addition to chromatographic separation procedures, conduits can be provided for electrophoretic, diffusion-based and/or affinity-based separations. In one aspect, the device is used for multi-dimensional chromatographic separation. The device may be used to perform at least two different types of separation, selected from the group consisting of chromatographic, electrophoretic, diffusion-based, and affinity-based separation. These are merely examples, and other combinations may be envisioned and are included within the scope of the invention.

In certain embodiments channels are filled with a separation media, reagents (e.g., such as enzymes, polymerases, antibodies, nucleic acids, polypeptides, peptides, and the like), and/or buffers.

In one aspect, in addition to polarity, separation characteristics can include, but are not limited to: isoelectric point, mass, affinity for a binding molecule (e.g., such as an antibody, metal, ligand, receptor, etc.), hydrophobicity, chirality, sequence characteristics, and the like.

A separation medium can comprise a charge-carrying component, a sieving component, a stationary phase, an affinity matrix, and the like. In certain aspects, a separation medium may comprise a gel. In certain other aspects, a separation medium may comprise a filter or membrane.

Separation media which may be included in fluid-transporting features include, but are not limited to, media for ion exchange chromatography (e.g., cation or anion exchange chromatography, and in one aspect SCX), media for size exclusion chromatography (SEC), media for performing chromatofocusing (CF) separation (e.g., based on isolelectric point), media for performing gel electrophoresis, media for performing affinity separations and the like.

In another aspect, the device comprises one or more fluid-transporting features comprising an immunoaffinity matrix comprising a solid phase on which one or more receptors are bound. As used herein, a "receptor" may include any molecule that may serve as a binding partner for any molecule to be depleted from a sample. For example a receptor may comprise an antibody or antigenic fragment thereof. However, a "receptor" as used herein is not necessarily a protein, but may also comprise a polypeptide, peptide, metal, metal coordination compound, carbohydrate (e.g., a lectin, such as concanavalin A or wheat germ agglutinin), aptamer, nucleic acid, co-factor, heparin, polymyxin, dye (such as Cibacron blue F3GA), a hydrocarbon (such as a methyl and phenyl radical that binds hydrophobic proteins), an agent comprising a functional group with affinity for protein moieties (such as a hydrazide, amine, N-hydroxy-succinimide, carboxyl, boronate and organomercury molecule) and generally, or any other molecule with the desired binding specificity.

In a further aspect, a fluid-transporting feature comprising an immunoaffinity matrix is in communication with a sample introduction port. The matrix can be used to immunodeplete a sample to reduce its sample complexity. In certain aspects, a fluid-transporting feature comprising an immunoaffinity matrix may be used to immunoselect desired sample components (e.g., cysteine-containing proteins, for example), in which case the feature may be in communication with a port for providing an elution buffer. In one aspect, the sample introduction port communicates with an immunoaffinityconduit which branches into a first conduit and a second conduit, one conduit for receiving flow-through from the immunoaffinity column comprising undesired materials and one conduit for receiving eluted, desired components which may be directed to a first separation fluid-transporting feature.

Fluid can be delivered from the channels to the chamber by a number of different methods, including by electroosmosis and/or by electrokinetic means and/or by generating pressure differences at different regions of a fluid-transporting feature.

Additional separation conduits can be included as part of the substrate/cover portion of the device and/or may be included one or more overlying switching structures.

In certain embodiments, the geometry of fluid-transporting features is selected to allow for serial separation or parallel sample separation. For example, a first and a second channel can be formed in a first substrate surface, forming first and second conduits of the device. In one aspect, a sample inlet port is in fluid communication with a valve (or other mechanism for controlling fluid flow) and the valve is constructed for providing selective fluid communication between the inlet port and either one of the conduits. Known valve types include, but are not limited to, ball valves, solenoid valves and gate valves. In one aspect, a valve is constructed which is an integrated portion of the device. Controlling voltage differences and/or pressure differences in various portions of the device also can be used to achieve the same effect.

Thus, in one aspect, a fluid sample introduced from a sample source can be conveyed in a defined sample flow path that travels, in order, through the sample inlet port, the selected conduit, and a sample outlet port associated with the selected conduit pr a downstream connecting fluid-transporting feature.

In certain aspects, the device comprises a fluid-transporting feature for sample processing prior to or after separation by the LC conduit or other separation conduits of the device. In certain aspects, the sample-processing fluid-transporting feature may comprise a reagent which includes but is not limited to: an enzyme, polymerase, cleaving agent, binding partner, e.g., nucleic acid binding protein, transcription factor, co-factor, receptor, ligand, helicase, topoisomerase, antibody, labeling reagent, derivatizing agent, dye, cell, ions (e.g., for altering pH of a fluid), etc. A sample-processing feature may be in communication with an inlet port for introducing the agent. The sample-processing fluid-transporting feature may also be in communication with a device for altering a condition of a fluid in the feature, for example such as a heating or cooling element, or a light source. Sample processing features may be upstream or downstream of the LC conduit and may be upstream or downstream of the mobile phase-transporting conduit.

Sample processing may include cleavage of proteins in a sample. For example, the fluid-transporting feature may comprise a cleavage agent, such as a chemical or enzymatic cleavage agent immobilized on a solid phase disposed on walls of the fluid-transporting feature, on or in solution. Suitable cleaving agents include, but are not limited to, enzymes, for example, one or more of: serine proteases (e.g., such as trypsin, hepsin, SCCE, TADG12, TADG14); metallo proteases (e.g., such as PUMP-1); chymotrypsin; cathepsin; pepsin; elastase; pronase; Arg-C; Asp-N; Glu-C; . Lys-C; carboxypeptidases A, B. and/or C; dispase; thermolysin; cysteine proteases such as gingipains, TEV protease, factor Xa and the like. Proteases may be isolated from cells or obtained through recombinant techniques. The cleaving agent is not limited to an enzyme and can be a chemical reagent, for example, cyanogen bromide (CNBr), 2-nitro-5- thiocyanobenzoic acid, N-bromosuccinamide and other reactive halogen compounds, hydroxylamine, 1-2M formic or acetic acid, periodate oxidation, 2-(2-nitrophenylsulfenyl)-3-methyl-3-bromoindolenine or o-iodosobenzoic acid (See, for example, Hermodson et al., "Methods in Protein Sequence Analysis", ed. Elzinga, Humans Press, Clifton, N.J., pp. 313-323, 1982). When the fluid sample contains nucleotidic moieties, nuclease enzymes capable of nucleotidic digestion, e.g., endonucleases and exonucleases, may be used.

The cleaving agent may be directly bound to a surface (the substrate walls or a solid phase in the channel or reservoir) or may be indirectly bound (e.g., via an antibody or other binding partner). In one embodiment, the device comprises a plurality of sample processing fluid-transporting features. For example, in one aspect, the device comprises a plurality of fluid transport elements, each of which comprises a different type of reagent, e.g., such as a different type of cleaving agent.

In certain aspects, the sample introducing means may be used to carry out digestion of the fluid sample before the sample is introduced into a separation conduit. That is, the conduit of the introducing means may comprise a cleaving agent.

In certain aspects, the device comprises one or more sample-holding reservoirs or conduits, which may at least transiently hold a sample. In one aspect, a sample-holding reservoir provides a compartment within the device wherein a sample-processing event may occur, i.e., the sample-holding reservoir may also be a sample-processing reservoir. Further, in additional aspects, aliquots of a sample may be exposed to an agent (e.g., such as a cleaving agent) in the sample-holding reservoir for different intervals of time, and then otherwise subjected to the same sample fluid processing/separating conditions, e.g., in parallel fluid-transporting features of the device.

In one aspect, a sample-holding reservoir comprises a waste reservoir, e.g., for receiving fluids comprising undesired components that have passed through a separation conduit. In further aspects, a sample-holding reservoir comprises an outlet port for removing a held fluid, such as a fluid comprising undesired sample components.

In another embodiment, the device comprises one or more focusing elements for concentrating a sample. For example, the device may comprise a means for establishing a pH gradient within a fluid-transporting feature. In one aspect, at least one separation medium in at least one separation path is used to establish a pH gradient in the path. For example the focusing feature may be a conduit in communication at one end with a fluid-transporting feature (e.g., a reservoir) comprising an ampholyte. Electrodes can be used to generate an electric field in the ampholyte-containing fluid-transporting feature. The acidic and basic groups of the molecules of the ampholyte will align themselves accordingly in the electric field, migrate, and in that way generate a temporary or stable pH gradient. A fluid-transporting feature downstream can be used to collect concentrated or focused biopolymer molecules that have passed through the gradient.

However, in certain aspects, the use of ampholytes is avoided. For example, a temperature gradient can be generated and used to form a pH gradient enabling isoelectric focusing.

Different sample introduction means, separating features, sample processing and/or collecting features can be isolated from features in the device using valves operating in different configurations to either release fluid into feature (e.g., conduit or reservoir), remove fluid from a feature, and/or prevent fluid from entering a feature (see, e.g., as described in U.S. Pat. No. 5,240,577).

In certain aspects, introduction of a fluid comprising at least partially separated sample components to a second separation conduit is coordinated with monitoring of the separation process in the first separation conduit; for example, detection of a sample plug comprising labeled sample components traveling through a first conduit can be coordinated with injection of the sample plug at a selected time into the inlet port of a second separation conduit.

In other aspects, combinations of separation conduits are provided for separating samples according to at least a first and second characteristic. In one embodiment, the first and second characteristics are different, i.e., the device is configured for multi-dimensional separation.

In one aspect, at least two of the conduits are constructed for separating the components of the fluid sample according to the same or a different component characteristic. In certain embodiments, multiple sample inlet ports are provided which each communicate with separate fluid-transporting features. Movement of fluid/samples through the inlets may be independent of each other or coordinated (e.g., such as in parallel sample processing). Combinations of serial and parallel fluid flow may also be provided. In certain aspects, as discussed above, the number of sample inlets corresponds to the number of wells in an industry standard microtiter plate or to the number of wells in a row or column of such a plate.

Parallel and/or serial sample processing may be combined with parallel and/or serial multi-dimensional separations. For example, at least one first conduit may provide a first dimension of separation for sample components according to a first characteristic, such as, for example, through size exclusion chromatography, ion chromatography, capillary electrophoresis, isoelectric focusing, or electrophoretic focusing via field gradient, or other separation techniques. Then, fractions from the first dimension separation can be directed into a second separation conduit for separation by a second different characteristic using one or more methods above or other separation techniques.

An optional sample processing chamber may be provided upstream and/or downstream of separation conduits, e.g., to cleave a biopolymer, to subject a biopolymer to an enzymatic reaction (e.g., cleavage, amplification, ligation), to subject a biopolymer to a chemical reaction, and/or to expose a sample component to a condition (e.g., a temperature, pH, exposure to light, etc.). An optional mixing chamber may be provided to mix a sample with fluid and/or sample components, e.g., from a sample inlet port or from another conduit on the same or different substrate. An optional sample holding chamber may be provided which can hold a sample for a selected time interval (e.g., such as the time interval it takes for a previous reaction in the same or a different chamber to occur or for separation to take place in a downstream fluid-transporting feature). In certain aspects, such optional chambers may provide a plurality of functions. For example, a processing chamber may be used as a mixing chamber and/or as a holding chamber, simultaneously or sequentially.

A further aspect concerns a system comprising a device of the invention and a detector.

In one aspect, the detector is placed in proximity to a separation conduit to enable a user to monitor separation efficiency and/or sample characteristics. In certain aspects, a plurality of detectors is interfaced with the system. For example, detectors may be placed at various flow points of the system to enable a user to monitor separation efficiency, and may be in proximity to both a first and second separation fluid-transporting feature. Detectors may monitor changes in refractive index, ultraviolet and/or visible light absorption, light scattering or fluorescence after excitation of a sample (e.g., a solution comprising proteins) with light of a suitable wavelength.

Detectors additionally can be coupled to cameras, appropriate filter systems, and photomultiplier tubes. The detectors need not be limited to optical detectors, but can include any detector used for detection in liquid chromatography and capillary electrophoresis, including electrochemical, conductivity, and the like.

In another aspect, the system comprises an analysis system for analyzing separated component(s) in a sample that has flowed through at least one separation conduit of the device. In one aspect, the analysis system comprises, or is connectable to, a processor for obtaining signals from a detector and converting these to data relating to properties of molecules being separated. The detector and/or analysis system may be directly or indirectly coupled to the device. In one aspect, an electrospray device is interfaced with a device according to the invention and delivers separated or at least partially separated molecules (e.g., such as peptides) to a detector/analysis system such as a mass spectrometry device. Electrospray devices are known in the art. See, e.g., Wilm and Mann, Anal. Chem. 1996;68: 1-8; Ramsey et al., Anal. Chem. 1997;69: 1174-1178; Xue et al., Anal Chem. 1997;69: 426-430; and U.S. Pat. No. 6,245,227. In one aspect, a device according to the invention comprises an integrated electrospray emitter such as described in U.S. Patent Publication 20040156753. In the case where the protein analysis system comprises a MALDI device, an automated spotter may be used to provide an interface with the MALDI device.

In other aspects, the LC conduit is in fluid communication with a collector, such as a sample vial, plate, or capillary or with another fluid-transporting feature for communication with another separation conduit on the same or a different substrate of the device. A collector may serve as a storage device or represent an intermediary to another device that uses and/or analyzes collected sample fractions.

Mass spectrometry technologies are well known in the art and may involve, for example, laser desorption and ionization technologies, whose use in conjunction with devices are described in U.S. Patent Nos. 5,705,813 and 5,716,825. In the alternative or in addition, the analyzer may comprise a source of electromagnetic radiation configured to generate electromagnetic radiation of a predetermined wavelength. Depending on the intrinsic properties of the fluid sample and/or any molecular labels used, the radiation may be ultraviolet, visible or infrared radiation.

In one aspect, the analysis system comprises or is in communication with a processor for determining the amino acid sequences of protein digestion products or peptides and/or for correlating mass/charge properties of peptides or derivatives thereof (or ionized fragments thereof) with a corresponding protein from which the peptide (or derivative thereof) derives. In another aspect, the system further comprises a memory in which data relating to molecules separated by devices according to the invention may be stored. The processor may be used to monitor and/or control other system functions, e.g., such as the opening or closing of valves or changes in potential in one or more fluid-transporting features.

The application further provides methods for using devices and systems disclosed herein.

In one aspect, a method comprises introducing a mobile phase through an LC conduit at a first flow rate, then introducing a mobile phase through the LC conduit at a second, slower flow rate. In one aspect, the first flow rate is from about 1-100 µl min, from about 1-20 µl/min, or from about 1- 10µl/minute, while the second flow rate ranges from For example, in one aspect, the flow rate for the first dimension separation ranges from about 0.01 - 1 µl/min. In another aspect, change in the flow rate of the mobile phase is produced by selectively diverting a portion of the mobile phase to a waste reservoir, while permitting the remainder of the mobile phase to be introduced into the LC conduit. In still another aspect, selective diverting or splitting of the mobile phase is implemented by way of a switching structure which selectively connects fluid-transporting features on the device and/or on the switching structure at selected times. In a further aspect, the mobile phase comprises a gradient of a mobile phase component. For example, the mobile phase gradient can range from about 2% to 42% or higher acetonitrile.

In one aspect, a mobile phase gradient and sample are introduced into an LC conduit without previously splitting the mobile phase. After sample components are eluted (e.g., the last peak from a sample is detected by a detection system in suitable proximity to the device), mobile phase flow is increased. A portion of the mobile phase is then diverted to a waste reservoir, while the remainder continues to flow, at a lower rate to the LC conduit. Sample components in the remainder of the mobile phase are eluted from the LC conduit.

As can be seen from a comparison of the left hand panel of Figure 3 vs. the right hand panel of Figure 3, in one aspect, on-chip splitting is designed to decrease run time as well as gradient recovery time. Figure 4 shows that this is in fact observed.

In one aspect, a switching structure is used to selectively control communication between different fluid-transporting features on the substrate/cover of the device. In one aspect, the switching structure, when in a splitting configuration, aligns a mobile phase-transporting conduit with a splitting region of the device, which connects two fluid-transporting features for receiving fluid flow from the mobile-phase transporting conduit to the mobile phase transporting conduit. One fluid-transporting feature is the LC conduit or is in communication with the LC conduit, while the other fluid-transporting feature or diverting conduit diverts a portion of fluid from the mobile phase-transporting conduit to a waste reservoir. In some aspects, undesired components in the fluid being recycled are removed by transporting the fluid to a separation conduit comprising a stationary phase or other components for selectively binding to the undesired components and removing these from the mobile phase.

Samples flowing through the LC conduit may be evaluated by an analysis system as described above. In one aspect, the LC conduit communicates with a downstream conduit that splits in two paths, one which connects with a second conduit and one which connects with the same or a different analysis system such that an aliquot of the separated sample may be evaluated by the analysis system while an another aliquot is subjected to further separation and/or analysis by the same or a different analysis system. The second conduit possibly comprises or is connected to a conduit that also splits into two paths, one path which permits a portion of a sample plug to be analyzed by an analysis system and a second path which may permit further or a different type of analysis or may permit isolation of components of the sample plug. Movement to and from separating channels and other fluid transporting features can be controlled using mechanisms known in the art, for example, through pressure-modifying mechanisms and/or through electroosmotic or electrokinetic flow-controlling mechanisms.

In one aspect, the choice of buffers and reagents in the upstream separation conduit will be optimized to be compatible with downstream fluid-transporting features with which it communicates. For example, a buffer or solvent may be selected which maintains the solubility of molecules in a sample while not substantially affecting processes occurring in downstream conduit(s). Conduits for providing dilution buffers and/or exchange matrices may be included at appropriate locations/flow paths in the device to dilute/exchange fluids and components in fluids as appropriate.

### EXAMPLE

The present invention is further illustrated by the following example. The example is provided to aid in the understanding of the invention and is not to be construed as a limitation thereof.

### EXAMPLE 1.

An Agilent 1100 CapPump running at 4 µL/min was connected to an Agilent 1100 µ-well plate autosampler for sample loading on the µ-chip. During sample loading the LC pump was set to constant pressure of 60bar and the measured flow rate was 3 µL/min. The restriction at the split point was adjusted such that there is 300nL/min flow through the LC channel and 2.7µL/min through the split capillary to waste. 2 min after the LC run started, the chip valve was switched to injection/splitless position. The LC mobile phase gradient delivered by an Agilent 1100 nanoPump was set to constant flowrate of 300nL/min. The experimental condition for the on-chip LC channel was a 40 minute gradient from 2% B to 42% B. At 42 min, the chip valve was switched to load/split position, and the LC pump was set to a constant pressure of 60 bar again. In such a configuration, the delay time between LC pump and the head of the LC column was reduced by ten-fold. Now the autosampler is ready to load next sample. The LC gradient recovery time is reduced to about 5min with the split/splitless approach. Results are shown in Figure 4.

Although the foregoing invention has been described in some detail by way of illustration and example for purposes of clarity of understanding, it is readily apparent to those of ordinary skill in the art in light of the teachings of this invention that certain changes and modifications may be made thereto without departing from the scope of the appended claims.

## Claims

1. A microfluidic device for performing liquid chromatography comprising a fluid-transporting conduit comprising a stationary phase (4) which is in communication with at least one mobile phase-transporting conduit, wherein the device comprises a splitting region (37) for diverting a portion of a mobile-phase flowing through the mobile-phase transporting conduit while the remainder flows to the fluid-transporting conduit comprising the stationary phase, wherein the device includes a mechanism for selective switching of the flow of mobile phase between a path that includes the splitting region and a path that does not include the splitting region, wherein the mechanism for selective switching of the flow of mobile phase comprises a switching structure which is able to connect the mobile phase-transporting conduit to the splitting region (37) of the device, the splitting region thereby connecting two fluid-transporting features, wherein one fluid-transporting feature is the conduit comprising the stationary phase or is connected to the conduit comprising the stationary phase and the other fluid-transporting feature is a waste reservoir or is connected to a waste reservoir, and wherein the device comprises a substrate comprising a cover and the switching structure is rotatable about an axis perpendicular to the substrate.

2. A microfluidic device as claimed in claim 1, wherein the substrate comprises a channel defining a portion of the mobile-phase transporting conduit.

3. A microfluidic device as claimed in claim 1 or 2, wherein the switching structure comprises at least a portion of the mobile-phase transporting conduit.

4. A microfluidic device as claimed in any of claims 1, 2 or 3, wherein the switching structure is movable from a first position in which the mobile phase-transporting conduit is connected to the conduit comprising the stationary phase (4) without diverting a portion of its flow, to a second position in which a portion of its flow is diverted to a fluid transporting feature that is a waste reservoir, or is connectable to a waste reservoir.

5. A microfluidic device as claimed in any preceding claim, wherein the device comprises a conduit for separating sample components upstream or downstream of the conduit comprising the stationary phase (4).

6. A microfluidic device as claimed in claim 5, wherein the upstream or downstream conduit comprises a separation medium.

7. A microfluidic device as claimed in claim 5, wherein the upstream or downstream conduit comprises an immunoaffinity matrix.

8. A microfluidic device as claimed in any preceding claim, wherein the mobile phase-transporting conduit is in communication with a mobile phase source (11).

9. A microfluidic device as claimed in claim 8, wherein the mobile phase source (11) provides a gradient of a mobile phase component.

10. A microfluidic device as claimed in claim 9, wherein the mobile phase transporting conduit is in fluid communication with an inlet for delivering different concentrations of the mobile phase component.

11. A microfluidic device as claimed in claim 9, wherein the mobile phase-transporting conduit is in fluid communication with a plurality of inlets for delivering different concentrations of a mobile phase component.

12. A system comprising a device as claimed in any preceding claim and a detector for monitoring separation of sample components by the conduit comprising the stationary phase (4).

13. A system as claimed in claim 12, further comprising an analysis module for obtaining and analysing data relating to separated sample components.

14. A system as claimed in claim 13, wherein the analysis module comprises a mass spectrometer.

## Patentansprüche

1. Mikrofluidische Vorrichtung zur Durchführung von Flüssigchromatographie, umfassend eine fluidtransportierende Leitung, umfassend eine stationäre Phase (4), welche sich in Verbindung mit wenigstens einer eine mobile Phase transportierenden Leitung befindet, wobei die Vorrichtung einen Splitting-Bereich (37) umfasst, um einen Teil einer mobilen Phase, welche durch die die mobile Phase transportierende Leitung fließt, abzuteilen, während der Rest zu der fluidtransportierenden Leitung fließt, welche die stationäre Phase umfasst, wobei die Vorrichtung einen Mechanismus enthält, um selektiv den Fluss der mobilen Phase zwischen einem Pfad umzuschalten, welcher den Splitting-Bereich umfasst, und einem Pfad, welcher den Splitting -Bereich nicht umfasst, wobei der Mechanismus zum selektiven Umschalten des Flusses der mobilen Phase eine Schaltstruktur umfasst, die in der Lage ist, die die mobile Phase transportierende Leitung mit dem Splitting -Bereich (37) der Vorrichtung zu verbinden, wodurch der Splitting-Bereich zwei fluidtransportierende Merkmale verbindet, wobei ein fluidtransportierendes Merkmal die Leitung umfassend die stationäre Phase ist, oder mit der Leitung umfassend die stationäre Phase verbunden ist, und das andere fluidtransportierende Merkmal ein Auffangbehälter ist oder mit einem Auffangbehälter verbunden ist, und wobei die Vorrichtung ein Substrat umfassend eine Abdeckung umfasst und die Schaltstruktur um eine senkrecht zu dem Substrat angeordnete Achse rotierbar ist.

2. Mikrofluidische Vorrichtung nach Anspruch 1, wobei das Substrat einen Kanal umfasst, welcher einen Teil der die mobile Phase transportierenden Leitung definiert.

3. Mikrofluidische Vorrichtung nach Anspruch 1 oder 2, wobei die Schaltstruktur wenigstens einen Teil der die mobile Phase transportierenden Leitung umfasst.

4. Mikrofluidische Vorrichtung nach einem der Ansprüche 1, 2 oder 3, wobei die Schaltstruktur von einer ersten Position, in welcher die die mobile Phase transportierende Leitung mit der Leitung umfassend die stationäre Phase (4) verbunden ist ohne einen Teil des Flusses abzutrennen, in eine zweite Position bewegbar ist, in welcher ein Teil des Flusses in ein fluidtransportierendes Merkmal, welches ein Auffangbehälter ist, abgeleitet wird oder mit einem Auffangbehälter verbindbar ist.

5. Mikrofluidische Vorrichtung nach einem der vorangehenden Ansprüche, wobei die Vorrichtung eine Leitung umfasst, um Probenbestandteile stromaufwärts oder stromabwärts der Leitung umfassend die stationäre Phase (4) abzutrennen.

6. Mikrofluidische Vorrichtung nach Anspruch 5, wobei die Leitung stromaufwärts oder stromabwärts ein Trennungsmedium umfasst.

7. Mikrofluidische Vorrichtung nach Anspruch 5, wobei die Leitung stromaufwärts oder stromabwärts eine Immunaffinitätsmatrix umfasst.

8. Mikrofluidische Vorrichtung nach einem der vorangehenden Ansprüche, wobei sich die die mobile Phase transportierende Leitung mit einer Quelle (11) der mobilen Phase in Verbindung befindet.

9. Mikrofluidische Vorrichtung nach Anspruch 8, wobei die Quelle (11) der mobilen Phase einen Gradienten eines mobilen Phasenbestandteils bereitstellt.

10. Mikrofluidische Vorrichtung nach Anspruch 9, wobei sich die die mobile Phase transportierende Leitung in Fluidverbindung mit einem Einlass befindet, um unterschiedliche Konzentrationen des mobilen Phasenbestandteils zuzuführen.

11. Mikrofluidische Vorrichtung nach Anspruch 9, wobei sich die die mobile Phase transportierende Leitung in Fluidverbindung mit einer Vielzahl von Einlässen befindet, um unterschiedliche Konzentrationen eines mobilen Phasenbestandteils zuzuführen.

12. System umfassend eine Vorrichtung nach einem der vorangehenden Ansprüche und einen Detektor zur Aufzeichnung der Trennung der Probenbestandteile durch die Leitung, welche die stationäre Phase (4) umfasst.

13. System nach Anspruch 12, des Weiteren umfassend ein Analysemodul um Daten in Bezug auf die abgetrennten Probenbestandteile zu erhalten und zu analysieren.

14. System nach Anspruch 13, wobei das Analysemodul ein Massenspektrometer umfasst.

## Revendications

1. Dispositif microfluidique permettant d'effectuer une chromatographie en phase liquide comprenant un conduit transportant un fluide comprenant une phase stationnaire (4) qui se trouve en communication avec au moins un conduit de transport d'une phase mobile, dans lequel le dispositif comprend une zone de séparation (37) permettant de dériver une partie d'une phase mobile circulant au travers du conduit de transport de phase mobile alors que le reste circule vers le conduit de transport de fluide comprenant la phase stationnaire, dans lequel le dispositif inclut un mécanisme de basculement sélectif de l'écoulement de la phase mobile entre un trajet qui inclut la zone de séparation et un trajet qui n'inclut pas la zone de séparation, dans lequel le mécanisme de basculement sélectif de l'écoulement de la phase mobile comprend une structure de basculement qui peut raccorder le conduit de transport de phase mobile à la zone de séparation (37) du dispositif, la zone de séparation raccordant de ce fait deux fonctions de transport de fluide, dans lequel une fonction de transport de fluide est représentée par le conduit comprenant la phase stationnaire ou bien est raccordée au conduit comprenant la phase stationnaire, et l'autre fonction de transport de fluide est un réservoir de résidus ou bien est raccordée à un réservoir de résidus, et dans lequel le dispositif comprend un substrat comprenant un couvercle et la structure de basculement peut tourner autour d'un axe perpendiculaire au substrat.

2. Dispositif microfluidique selon la revendication 1, dans lequel le substrat comprend un canal définissant une partie du conduit de transport de la phase mobile.

3. Dispositif microfluidique selon la revendication 1 ou 2, dans lequel la structure de basculement comprend au moins une partie du conduit de transport de la phase mobile.

4. Dispositif microfluidique selon l'une quelconque des revendications 1, 2 ou 3, dans lequel la structure de basculement est mobile depuis une première position dans laquelle le conduit de transport de la phase mobile est raccordé au conduit comprenant la phase stationnaire (4) sans dériver une partie de son écoulement, jusqu'à une seconde position dans laquelle une partie de son écoulement est dérivée vers une fonction de transport de fluide c'est-à-dire un réservoir de résidus, ou bien elle peut être raccordée à un réservoir de résidus.

5. Dispositif microfluidique selon l'une quelconque des revendications précédentes, dans lequel le dispositif comprend un conduit permettant de séparer des composants formant échantillons vers l'amont vers l'aval du conduit comprenant la phase stationnaire (4).

6. Dispositif microfluidique selon la revendication 5, dans lequel le conduit vers l'amont ou vers l'aval comprend un milieu de séparation.

7. Dispositif microfluidique selon la revendication 5, dans lequel le conduit vers l'amont ou vers l'aval comprend une matrice d'immuno affinité.

8. Dispositif microfluidique selon l'une quelconque des revendications précédentes, dans lequel le conduit de transport de la phase mobile est en communication avec une source de phase mobile (11).

9. Dispositif microfluidique selon la revendication 8, dans lequel la source de la phase mobile (11) procure un gradient sur un composant de la phase mobile.

10. Dispositif microfluidique selon la revendication 9, dans lequel le conduit de transport de la phase mobile est en communication fluide avec un orifice d'entrée afin de délivrer différentes concentrations du composant de la phase mobile.

11. Dispositif microfluidique selon la revendication 9, dans lequel le conduit de transport de la phase mobile est en communication fluide avec une pluralité d'orifices d'entrée afin de délivrer différentes concentrations d'un composant de la phase mobile.

12. Système comprenant un dispositif conforme à l'une quelconque des revendications précédentes et un détecteur destiné à surveiller la séparation de composants formant échantillons par le conduit comprenant la phase stationnaire (4).

13. Système selon la revendication 12, comprenant en outre un module d'analyse permettant d'obtenir et d'analyser des données se rapportant à des composants séparés formant échantillons.

14. Système selon la revendication 13, dans lequel le module d'analyse comprend un spectromètre de masse.
